# FASCICULE DE BREVET EUROPEEN

(11) **EP 2 661 565 B1**
(45) Date de publication et mention de la délivrance du brevet: **02.03.2022**
(21) Numéro de dépôt: 12702572.4
(22) Date de dépôt: 03.01.2012
(51) Int. Cl.: F16D 9/04, F01D 21/02, F01D 21/04

(54) **DISPOSITIF ET PROCEDE DE PROTECTION MECANIQUE.**
MECHANISCHES SCHUTZVERFAHREN UND VORRICHTUNG DAFÜR
MECHANICAL PROTECTION METHOD AND DEVICE

(30) Priorité: 05.01.2011 FR 1150066
(43) Date de publication de la demande: 13.11.2013
(73) Titulaire: Safran Helicopter Engines, 64510 Bordes (FR)
(72) Inventeur: BATLLE, Frédéric, Ferdinand, Jacques, F-64140 Lons (FR)
(74) Mandataire: Cabinet Beau de Loménie
(86) Numéro de dépôt international: PCT/FR2012/050001
(87) Numéro de publication internationale: WO 2012/093228

(56) Documents cités:
- EP-A2- 1 382 805
- WO-A1-2010/139798
- DE-B3- 10 344 870
- Transportation Safety Board of Cananda: "Aviation Reports - 2002 - A02p0320", , 15 septembre 2004 (2004-09-15), XP002656307, Extrait de l'Internet: URL:www.tsb.gc.ca/eng/rapports-reports/avi ation [extrait le 2011-08-05]
- "Rotordynamics", , 23 juin 2011 (2011-06-23), XP002656308, Extrait de l'Internet: URL:en.wikipedia.org/w/index.php?title=Rot ordynamics&printable [extrait le 2011-08-05]
- Erik Swanson ET AL: "A Practical Review of Rotating Machinery Critical Speeds and Modes", Sound and Vibration, 31 May 2005 (2005-05-31), pages 10-17, XP055417211, Retrieved from the Internet: URL:http://sandv.com/downloads/0505swan.pd f [retrieved on 2017-10-19]

## Description

La présente invention concerne une machine comportant notamment un dispositif de protection mécanique.

Le document WO 2010/139798 A divulgue un exemple de machine comportant une pompe d'alimentation en carburant, un arbre moteur couplé à une turbine configurée pour être actionnée par l'expansion d'un fluide chauffé par combustion dudit carburant, et un arbre de transmission qui connecte l'arbre moteur à la pompe d'alimentation pour l'actionnement de ladite pompe d'alimentation.

Afin de protéger des dispositifs contre les surcharges mécaniques, la personne du métier a longtemps connu des dispositifs de protection dans lesquels un élément d'une chaîne de transmission mécanique est sacrifié en cas de surcharge, de manière à éviter des dommages plus graves en aval de cette chaîne. Dans la plupart des cas, ces dispositifs sont destinés à offrir une protection contre les forces ou couples excessifs. Par exemple, les brevets américains US 4,313,712 et US 6,042,292 divulguent des dispositifs de protection mécanique contre des efforts radiaux excessifs sur des arbres rotatifs. Toutefois, ces dispositifs sacrificiels connus présentent l'inconvénient de ne pas servir comme protection contre les survitesses. Or, dans beaucoup de situations, une survitesse peut causer autant ou plus de dommage qu'une force ou couple excessifs. En particulier, dans certaines machines comme par exemple les turbomoteurs, une survitesse peut causer un phénomène de retour positif, provoquant une augmentation progressive de la vitesse jusqu'à la destruction de la machine.

Dans la demande internationale de brevet WO 2008/101876, un dispositif de protection mécanique a été divulgué comportant un arbre de transmission avec une fréquence de résonance en flexion correspondant à une survitesse de rotation prédéterminée de l'arbre de transmission. Dans ce dispositif, la résonance en flexion de l'arbre de transmission est destinée à absorber la puissance transmise en rotation par l'arbre de transmission, empêchant ainsi le dépassement de cette survitesse. Ceci n'est toutefois possible que si la puissance disponible est limitée et l'amortissement de l'arbre en flexion suffit à dissiper toute la puissance disponible. Si la puissance disponible peut augmenter avec le couple de résistance, la résonance en flexion de l'arbre ne suffira pas à la neutraliser.

La présente invention vise à remédier à ces inconvénients.

Dans la machine de l'invention suivant la revendication 1, ce but est atteint grâce au fait que l'amortissement de l'arbre de transmission est insuffisant pour éviter une rupture suite à une résonance en flexion dont la fréquence correspond à une survitesse de rotation prédéterminée de l'arbre de transmission et de l'arbre moteur. L'arbre de transmission forme donc un élément sacrificiel interrompant la chaîne de transmission mécanique en cas de survitesse. Ainsi, la rupture de l'arbre de transmission en cas de survitesse de l'arbre moteur interrompra l'alimentation en carburant de la machine, provoquant l'arrêt de la turbine.

Grâce à ces dispositions, il est possible d'obtenir une protection effective contre une survitesse précisément prédéterminée, et ceci même lorsque la puissance transmise n'est pas limitée.

Avantageusement, ladite fréquence de résonance en flexion correspond à un premier mode de flexion. Ainsi, la première fréquence de résonance atteinte lors d'une accélération progressive de l'arbre de transmission sera celle de rupture de l'arbre.

La combustion peut être interne ou externe. Ainsi, la turbine peut être une turbine à gaz actionnée directement par les gaz de combustion du carburant, ou une turbine à vapeur actionnée par un fluide chauffé indirectement par la combustion du carburant.

L'invention concerne également un véhicule, en particulier un aéronef, comportant une machine suivant l'invention. Par exemple, la machine peut être un turbomoteur d'aéronef à voilure tournante.

L'invention concerne également le procédé de protection mécanique comportant la rupture d'un arbre de transmission par une résonance en flexion de cet arbre à une survitesse de rotation prédéterminée.

L'invention sera bien comprise et ses avantages apparaîtront mieux, à la lecture de la description détaillée qui suit, d'un mode de réalisation représenté à titre d'exemple non limitatif. La description se réfère aux dessins annexés sur lesquels :
- la figure 1 est une illustration d'un modèle d'un arbre de transmission d'un dispositif de protection mécanique suivant un mode de réalisation de l'invention ;
- la figure 2 est un diagramme de Campbell de l'arbre de transmission de la figure 1 ;
- la figure 3a est une illustration schématique d'un turbomoteur comportant le dispositif de protection mécanique de la figure 1 ; et
- la figure 3b est une illustration schématique du turbomoteur de la figure 3a lors de la rupture de l'arbre de transmission du dispositif de protection mécanique.

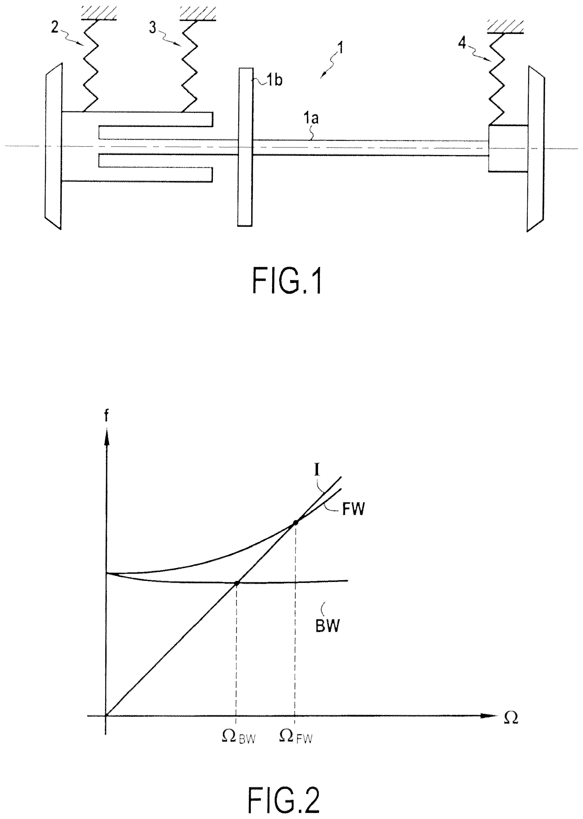

Un modèle d'un arbre de transmission 1 pour un dispositif de protection mécanique suivant un mode de réalisation de l'invention est illustré sur la figure 1. Cet arbre de transmission 1 est modélisé en tant que rotor de Jeffcott, comportant un tronc la et un disc central 1b solidaires l'un de l'autre et soutenus par des paliers élastiques 2,3 et 4. Le tronc la est lui-même élastique. L'arbre de transmission 1 est donc un système dynamique présentant plusieurs fréquences de résonance, dont des résonances en flexion entre les paliers 2,3 et 4. Chaque mode de flexion de l'arbre de transmission 1 présente deux fréquences de résonance, une fréquence de résonance en précession directe (en anglais « forward whirl », ou FW) et une fréquence de résonance en précession inverse (en anglais, « backward whirl » ou BW). Ces deux fréquences suivent chacune une courbe en fonction de la vitesse de rotation de l'arbre de transmission 1. Des courbes FW et BW de, respectivement, la fréquence de résonance du premier mode de flexion en précession directe, et la fréquence de résonance du premier mode de flexion en précession inverse, sont illustrées sur la figure 2, en fonction de la vitesse de rotation de l'arbre 1. Sur le même graphique, la ligne droite I illustre une fréquence influente fᵣ correspondant à la vitesse de rotation Ω de l'arbre 1. Principalement à cause de balourds, des forces sont exercées, même inadvertamment, sur l'arbre en rotation suivant cette fréquence fᵣ. Les modes de flexion en précession inverse ne peuvent pas être excités par des balourds. Par contre, lorsque la fréquence influente fᵣ coïncide avec une fréquence de résonance en précession directe, c'est-à-dire, dans le graphique de la figure 2, à la vitesse de rotation critique Ω_{FW}, l'arbre 1 entre en résonance. Bien qu'un arbre de transmission 1 réel puisse présenter un certain amortissement inhérent, cet amortissement inhérent est très limité et ne suffit normalement pas à dissiper l'énergie des vibrations induites dans l'arbre 1 à ces vitesses de rotation. L'amplitude des vibrations de l'arbre 1 en flexion va donc diverger jusqu'à rupture de l'arbre 1.

Dans le dispositif de protection mécanique illustré, l'arbre 1 est calibré de manière à ce que la vitesse de rotation critique Q_{Fw} en précession directe du premier mode de flexion corresponde à une survitesse prédéterminée, telle que, par exemple, 120 % d'une vitesse de rotation nominale Ω_{η} de l'arbre 1. Ainsi, si l'arbre de transmission 1 atteint cette survitesse Ω_{FW}, la survitesse provoquera une résonance catastrophique de l'arbre de transmission 1, rompant l'arbre de transmission 1 et interrompant ainsi la chaîne de transmission.

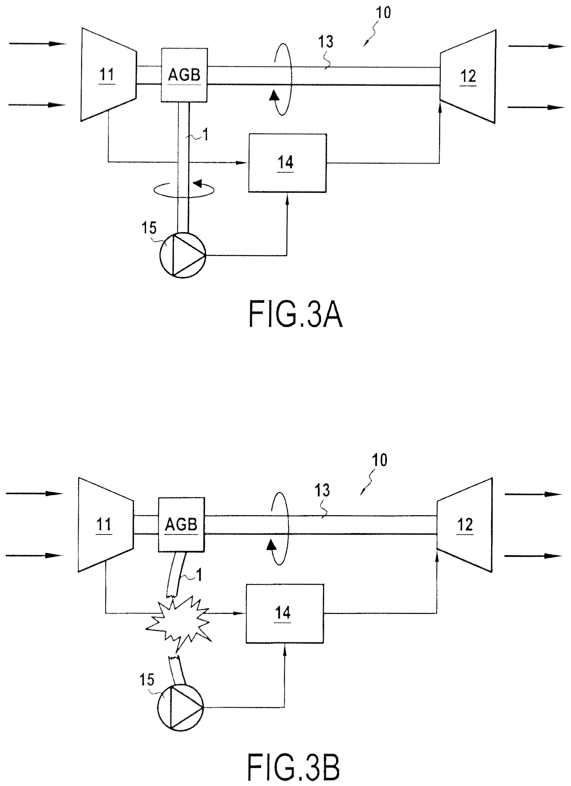

L'arbre de transmission 1 fonctionne ainsi comme organe sacrificiel de protection mécanique, non pas contre un excès de force ou de couple, mais contre un excès de vitesse. Un exemple d'application d'un tel dispositif de protection mécanique contre les survitesses est illustré sur la figure 3a. Dans cet exemple, un dispositif suivant l'invention est utilisé pour protéger un turbomoteur 10 contre une survitesse. Ce turbomoteur 10 comporte un compresseur 11 et une turbine 12, reliés par un arbre moteur 13, et une chambre de combustion 14 alimentée en carburant par une pompe d'alimentation 15. L'air comprimé par le compresseur 12 est fourni à cette chambre de combustion 14, et la détente des gaz de combustion chauds dans la turbine 12 sert à actionner l'arbre moteur 13 avec un important surplus de puissance par rapport à celle requise pour actionner le compresseur 11. L'arbre moteur 13 peut ainsi être relié à d'autres dispositifs mécaniques pour leur actionnement, comme, par exemple, à un rotor d'hélicoptère.

Dans le turbomoteur 10 illustré, l'arbre de transmission 1 est couplé à l'arbre moteur 13 à travers une boite de vitesses pour accessoires AGB. L'arbre de transmission 1 est aussi couplé à la pompe d'alimentation 15 pour son actionnement. De cette manière, en fonctionnement, une puissance est dérivée de l'arbre moteur 13 à travers l'arbre de transmission 1 pour assurer l'alimentation de la chambre de combustion 14 en carburant.

Si une survitesse prédéterminée de l'arbre moteur 13 est atteinte, l'arbre de transmission 1 atteint sa vitesse de rotation critique Ω_{FW} et rompt suite à la résonance en flexion. L'actionnement de la pompe d'alimentation 15 est ainsi interrompu, et l'apport de carburant à la chambre de combustion 14 s'arrête. N'étant plus alimenté en carburant, le turbomoteur 10 cesse de produire une puissance d'actionnement de l'arbre moteur 13, et l'emballement de l'arbre moteur 13 est ainsi évité.

Suivant un exemple d'application, l'arbre moteur 13 du turbomoteur 10 peut avoir une vitesse nominale de 30000 tours/minute, et le dispositif de protection mécanique peut être réglé pour arrêter l'alimentation à une survitesse de 120 % de la vitesse nominale, c'est-à-dire à 36000 tours/minute. Si l'arbre de transmission 1 est entraîné par l'arbre moteur 13 avec un facteur de démultiplication de 1/3, il sera donc conçu pour rompre à une vitesse critique de 12000 tours/minute, c'est-à-dire avec une fréquence de résonance Ω_{FW} de 200 Hz en précession directe, au premier mode de flexion de l'arbre.

Quoique la présente invention ait été décrite en se référant à des exemples de réalisation spécifiques, il est évident que des différentes modifications et changements peuvent être effectués sur ces exemples sans sortir de la portée générale de l'invention telle que définie par les revendications. Par conséquent, la description et les dessins doivent être considérés dans un sens illustratif plutôt que restrictif.

## Revendications

1. Machine comportant une pompe d'alimentation (15) en carburant, un arbre moteur (13) couplé à une turbine (12) configurée pour être actionnée par l'expansion d'un fluide chauffé par combustion dudit carburant, et un dispositif de protection mécanique comportant un arbre de transmission (1) qui connecte l'arbre moteur (13) à la pompe d'alimentation (15) pour l'actionnement de ladite pompe d'alimentation (15), dans laquelle l'arbre de transmission (1) a une fréquence de résonance en flexion correspondant à une survitesse de rotation prédéterminée de l'arbre de transmission (1) et de l'arbre moteur (13), et en ce que l'amortissement de l'arbre de transmission (1) est insuffisant pour éviter une rupture de l'arbre de transmission (1) suite à ladite résonance en flexion.

2. Machine suivant la revendication 1, dans lequel ladite fréquence de résonance en flexion correspond à un premier mode de flexion.

3. Véhicule comportant une machine suivant une quelconque des revendications 1 ou 2.

4. Aéronef comportant une machine suivant une quelconque des revendications 1 ou 2.

5. Procédé de protection mécanique, comportant la rupture d'un arbre de transmission (1) par une résonance en flexion de cet arbre de transmission (1) à une survitesse de rotation prédéterminée.

6. Procédé de protection mécanique suivant la revendication 5, dans lequel ladite résonance correspond à un premier mode de flexion dudit arbre de transmission (1).

7. Procédé de protection mécanique suivant une quelconque des revendications 5 à 6, dans lequel ledit arbre de transmission (1) transmet une rotation d'un arbre moteur (13) vers une pompe d'alimentation (15).

8. Procédé de protection mécanique suivant la revendication 7, dans lequel ladite pompe d'alimentation (15) alimente en carburant une combustion dont l'énergie thermique sert à faire tourner l'arbre moteur (13).

9. Procédé de protection mécanique suivant la revendication 8, dans lequel ledit arbre moteur (13) est actionné par une turbine (12), la turbine (12) étant actionnée à son tour par l'expansion d'un fluide chauffé par ladite combustion.

## Patentansprüche

1. Maschine, aufweisend eine Pumpe (15) zur Versorgung mit Kraftstoff, eine Motorwelle (13), die an eine Turbine (12) gekoppelt ist, die ausgelegt ist, um durch Ausdehnung eines durch Verbrennung des Kraftstoffs erwärmten Fluids betätigt zu werden, und eine mechanische Schutzvorrichtung, die eine Übertragungswelle (1) aufweist, die die Motorwelle (13) mit der Versorgungspumpe (15) für die Betätigung der Versorgungspumpe (15) verbindet, wobei die Übertragungswelle (1) eine Flexionsresonanzfrequenz hat, die einer vorher festgelegten RotationsÜbergeschwindigkeit der Übertragungswelle (1) und der Motorwelle (13) entspricht, und dass die Dämpfung der Übertragungswelle (1) unzureichend ist, um einen Bruch der Übertragungswelle (1) infolge der Flexionsresonanz zu verhindern.

2. Maschine nach Anspruch 1, wobei die Flexionsresonanzfrequenz einem ersten Flexionsmodus entspricht.

3. Fahrzeug, aufweisend eine Maschine nach einem der Ansprüche 1 oder 2.

4. Flugzeug, aufweisend eine Maschine nach einem der Ansprüche 1 oder 2.

5. Mechanisches Schutzverfahren, aufweisend das Brechen einer Übertragungswelle (1) durch eine Flexionsresonanz dieser Übertragungswelle (1) bei einer vorher festgelegten RotationsÜbergeschwindigkeit.

6. Mechanisches Schutzverfahren nach Anspruch 5, wobei die Resonanz einem ersten Flexionsmodus der Übertragungswelle (1) entspricht.

7. Mechanisches Schutzverfahren nach einem der Ansprüche 5 bis 6, wobei die Übertragungswelle (1) eine Rotation einer Motorwelle (13) zu einer Versorgungspumpe (15) überträgt.

8. Mechanisches Schutzverfahren nach Anspruch 7, wobei die Versorgungspumpe (15) eine Verbrennung mit Kraftstoff versorgt, deren thermische Energie dazu dient, dass sich die Motorwelle (13) dreht.

9. Mechanisches Schutzverfahren nach Anspruch 8, wobei die Motorwelle (13) von einer Turbine (12) betätigt wird, wobei die Turbine (12) ihrerseits durch die Ausdehnung eines durch die Verbrennung erwärmten Fluids betätigt wird.

## Claims

1. A machine including a fuel feed pump (15), a drive shaft (13) coupled to a turbine (12) configured to be actuated by the expansion of a fluid heated by combustion of said fuel, and a mechanical protection device comprising a transmission shaft (1) that connects the drive shaft (13) to the feed pump (15) in order to actuate said feed pump (15), wherein the drive shaft (13) has a resonant frequency in bending corresponding to a predetermined rotary overspeed of the transmission shaft (1), and wherein the damping of the transmission shaft (1) is insufficient to avoid breakage of the transmission shaft (1) resulting from said resonance in bending.

2. A mechanical protection device according to claim 1, wherein said resonant frequency in bending corresponds to a first bending mode.

3. A vehicle including a machine according to any one of claims 1 or 2.

4. An aircraft including a machine according to any one of claims 1 or 2.

5. A mechanical protection method comprising breaking a transmission shaft (1) by resonance in bending of the transmission shaft (1) at a predetermined rotary overspeed.

6. A mechanical protection method according to claim 5, wherein said resonance corresponds to a first bending mode of said transmission shaft (1).

7. A mechanical protection method according to any one of claims 5 to 6, wherein said transmission shaft (1) transmits rotation from a drive shaft (13) to a feed pump (15) .

8. A mechanical protection method according to claim 7, wherein said feed pump (15) feeds fuel for combustion to deliver heat energy serving to cause the drive shaft (13) to rotate.

9. A mechanical protection method according to claim 8, wherein said drive shaft (13) is actuated by a turbine (12), the turbine (12) being actuated in turn by the expansion of a fluid heated by said combustion.
